# EUROPÄISCHE PATENTSCHRIFT

(11) **EP 1 666 513 B1**
(45) Veröffentlichungstag und Bekanntmachung des Hinweises auf die Patenterteilung: **30.09.2009**
(21) Anmeldenummer: 06110268.7
(22) Anmeldetag: 06.11.1998
(51) Int. Cl.: C08G 18/10, C08G 18/75, C08G 18/76, C08G 18/72

(54) **Verfahren zur Herstellung eines Polyurethanbindemittels mit einem niedrigen Gehalt an leichtflüchtigen Monomeren**
procees for production of a polyurethane binder with low monomer content
Procedure de manufacture d'un liant à base de polyuréthane avec un contenu réduit de monomères

(30) Priorität: 11.11.1997 DE 19749834
(43) Veröffentlichungstag der Anmeldung: 07.06.2006
(62) Teilanmeldung aus: 98963418.3
(73) Patentinhaber: Henkel AG & Co. KGaA, 40589 Düsseldorf (DE)
(72) Erfinder: Hübener, Achim, Dr., 21220 Seevetal (DE); Henke, Günter, Dr., 41470 Neuss (DE); Bauer, Andreas, 41564 Kaarst (DE)

(56) Entgegenhaltungen:
- EP-A- 0 005 473
- EP-A- 0 118 065
- EP-A- 0 150 444
- GB-A- 1 052 041
- US-A- 4 544 763

## Beschreibung

Die vorliegende Erfindung betrifft ein, Verfahren zur Herstellung eines niedrigviskosen, Isocyanatgruppen tragenden Polyurethanbindemittels, das trotz seiner niedrigen Viskosität nur einen geringen Gehalt an leichtflüchtigen Restmonomeren aufweist und im wesentlichen keine Migrate bildet. Weiterhin betrifft die Erfindung die Verwendung dieser niedrigviskosen, Isocyanatgruppen (NCO-Gruppen) tragenden Polyurethanbindemittels bei der Herstellung von Klebstoffen, insbesondere Ein- und Zweikomponentenklebstoffen, beispielsweise zur Verklebung von bahnförmigen Materialien aus Papier, Kunststoff oder Aluminium, oder Gemischen aus zwei oder mehr davon, Beschichtungen, insbesondere Laken, Dispersionsfarben und Gießharzen sowie Formkörpern.

Polyurethan-Präpolymere mit Isocyanat-Endgruppen sind seit langem bekannt. Sie können mit geeigneten Härtern - meist polyfunktionellen Alkoholen - in einfacher Weise zu hochmolekularen Stoffen kettenverlängert oder vernetzt werden. Polyurethan-Präpolymere haben auf vielen Anwendungsgebieten Bedeutung erlangt, so bei der Herstellung von Klebstoffen, Beschichtungen, Gießharzen und Formkörpern.

Um Polyurethan-Präpolymere mit endständigen Isocyanatgruppen zu erhalten, ist es üblich, polyfunktionelle Alkohole mit einem Überschuss an Polyisocyanaten, in der Regel wenigstens überwiegend Diisocyanate, zur Reaktion zu bringen. Hierbei lässt sich das Molekulargewicht wenigstens näherungsweise über das Verhältnis von OH-Gruppen zu Isocyanatgruppen steuern. Während ein Verhältnis von OH-Gruppen zu Isocyanatgruppen von 1 : 1 oder nahe 1 : 1 zu in der Regel hohen Molekulargewichten führt, wird beispielsweise bei einem Verhältnis von etwa 2 : 1 bei der Verwendung von Diisocyanaten im statistischen Mittel an jede OH-Gruppe ein Diisocyanatmolekül angehängt, so dass es im Verlauf der Reaktion im Idealfall nicht zu Oligomerbildung bzw. Kettenverlängerung kommt.

In der Praxis lassen sich solche Kettenverlängerungsreaktionen allerdings nicht unterbinden, was dazu führt, dass am Ende der Umsetzung, unabhängig von der Reaktionszeit, eine gewisse Menge der im Überschuss eingesetzten Komponente übrig bleibt. Wird als Überschusskomponente beispielsweise Diisocyanat eingesetzt, so verbleibt ein in der Regel nicht unerheblicher Anteil dieser Komponente aufgrund des dargestellten Sachverhalts im Reaktionsgemisch.

Besonders störend wirkt sich ein Gehalt an solchen Substanzen dann aus, wenn es sich um leicht flüchtige Diisocyanate handelt. Die Dämpfe dieser Diisocyanate sind häufig gesundheitsschädlich, und die Anwendung von Produkten mit einem hohen Gehalt an solchen leichtflüchtigen Diisocyanaten erfordert seitens des Anwenders aufwendige Maßnahmen zum Schutz der das Produkt verarbeitenden Personen, insbesondere aufwendige Maßnahmen zur Reinhaltung der Atemluft.

Da Schutz- und Reinigungsmaßnahmen in der Regel mit hohen finanziellen Investitionen oder Kosten verbunden sind, besteht seitens der Anwender ein Bedürfnis nach Produkten, die einen, in Abhängigkeit vom verwendeten Isocyanat, möglichst niedrigen Anteil an leichtflüchtigen Diisocyanaten aufweisen.

Unter "leichtflüchtig" werden im Rahmen des vorliegenden Textes solche Substanzen verstanden, die bei etwa 30°C einen Dampfdruck von mehr als etwa 0,0007 mmHg oder einen Siedepunkt von weniger als etwa 190°C (70 mPa) aufweisen.

Setzt man anstatt der leichtflüchtigen Diisocyanate schwerflüchtige Diisocyanate ein, insbesondere die weit verbreiteten bicyclischen Diisocyanate, beispielsweise Diphenylmethandiisocyanate, so erhält man in der Regel Polyurethanbindemittel mit einer Viskosität, die üblicherweise außerhalb des für einfache Verarbeitungsmethoden brauchbaren Bereichs liegt. In diesen Fällen kann die Viskosität der Polyurethan-Präpolymere durch Zugabe geeigneter Lösemittel abgesenkt werden, was aber der meist geforderten Lösemittelfreiheit widerspricht. Eine weitere Möglichkeit zur Absenkung der Viskosität unter Vermeidung von Lösemitteln besteht in der Zugabe eines Überschusses an monomeren Polyisocyanaten, die im Rahmen eines späteren Härtungsvorgangs (nach der Zugabe eines Härters oder durch Härten unter Feuchtigkeitseinfluss) mit in die Beschichtung oder Verklebung eingebaut werden (Reaktivverdünner).

Während sich die Viskosität der Polyurethan-Präpolymeren auf diese Weise tatsächlich absenken lässt, führt die in der Regel unvollständige Umsetzung des Reaktivverdünners häufig zu einem Gehalt der Verklebung bzw. der Beschichtung an freien, monomeren Polyisocyanaten, die beispielsweise innerhalb der Beschichtung oder Verklebung, oder zum Teil auch in die beschichteten oder verklebten Materialien hinein, "wandern" können. Solche Bestandteile einer Beschichtung oder Verklebung werden in Fachkreisen häufig als "Migrate" bezeichnet. Durch Kontakt mit Feuchtigkeit werden die Isocyanatgruppen der Migrate kontinuierlich zu Aminogruppen umgesetzt. Die üblicherweise dadurch entstehenden aromatischen Amine stehen im Verdacht, eine kanzerogene Wirkung zu haben.

Insbesondere im Verpackungsbereich sind Migrate häufig nicht tolerierbar, da eine Wanderung der Migrate durch das Verpackungsmaterial hindurch zu einer Kontamination des verpackten Gutes führen würde und der Verbraucher beim Verbrauch des Gutes zwangsläufig mit den Migraten in Kontakt kommen müsste.

Besonders im Verpackungsbereich, speziell bei Lebensmittelverpackungen, sind solche Migrate daher unerwünscht.
Zur Vermeidung der oben geschilderten Nachteile schlägt die EP-A 0 118 065 vor, Polyurethan-Präpolymere in einem zweistufigen Verfahren herzustellen. Hierbei wird zunächst in einer ersten Stufe ein monocyclisches Diisocyanat mit einem polyfunktionellen Alkohol im Verhältnis OH-Gruppen : Isocyanatgruppen < 1 umgesetzt und anschließend in einem zweiten Schritt ein bicyclisches Diisocyanat mit polyfunktionellen Alkoholen im Verhältnis OH-Gruppen : Isocyanatgruppen < 1 in Anwesenheit des im ersten Schritt hergestellten Präpolymeren zur Reaktion gebracht. In der zweiten Stufe wird dabei ein Verhältnis von OH-Gruppen : Isocyanatgruppen von 0,65 bis 0,8, vorzugsweise 0,7 bis 0,75 vorgeschlagen. Die so erhältlichen Präpolymeren weisen bei hohen Temperaturen (75 °C bzw. 90 °C) immer noch Viskositäten von 2500 mPas bzw. 7150 mPas und 9260 mPas auf.

Die DE-A 34 01 129 betrifft ein Verfahren zur Herstellung gemischter Polyurethan-Präpolymere, bei dem mehrfunktionelle Alkohole zunächst mit der schneller reagierenden Isocyanatgruppe eines asymmetrischen Diisocyanats unter Erhalt der langsamer reagierenden Gruppe umgesetzt werden, und die Umsetzungsprodukte dann mit einem symmetrischen Diisocyanat verbunden werden, dessen gleichreaktive Isocyanatgruppen wiederum schneller reagieren als die langsam reagierenden Gruppen der erstgenannten mehrfunktionellen Isocyanatverbindung. Die beschriebenen Polyurethanpräpolymeren weisen hohe Viskositäten und damit hohe Verarbeitungstemperaturen auf, die ihre Anwendung nur unter solchen Bedingungen zulassen, die hohe Verarbeitungstemperaturen erlauben.

Die EP-A 0 019 120 betrifft ein Verfahren zur Herstellung elastischer, wetterbeständiger Flächengebilde. Hierzu wird ein zweistufiges Verfahren vorgeschlagen, bei dem in einer ersten Stufe Toluylendiisocyanat (TDI) mit mindestens äquimolaren Mengen eines Polyols zur Reaktion gebracht und das erhaltene Reaktionsprodukt anschließend mit Diphenylmethandiisocyanat (MDI) und einem Polyol umgesetzt wird. Die so erhältlichen Polyurethanbindemittel sollen dazu in der Lage sein, mit Wasser oder mit Luftfeuchtigkeit auszuhärten. Das beschriebene Verfahren führt zwar zu Produkten mit einer relativ niedrigen Viskosität, der Gehalt an freiem, leichtflüchtigem Diisocyanat (im vorliegenden Fall TDI) ist jedoch immer noch hoch (0,7 Gew.-%) und lässt sich nur dann verringern, wenn zeit- und energieaufwendige Methoden zur Entfernung von überschüssigem, leichtflüchtigem Diisocyanat, beispielsweise eine Dünnschichtdestillation, angewandt werden.

Häufig werden Verbundfolien in Bereichen mit erhöhter Temperatur, beispielsweise bei der Zubereitung von Lebensmitteln, eingesetzt. Bei mit herkömmlichen Klebstoffen ausgestatteten Verbundstoffen kommt es jedoch oft zu Delaminationserscheinungen im Verklebungsbereich, wenn die Folien Temperaturen ausgesetzt werden, wie sie üblicherweise bei der Lebensmittelzubereitung herrschen.

Aufgabe der Erfindung war es daher, ein Verfahren zur Herstellung eines Polyurethanbindemittels zur Verfügung zu stellen, wobei das Bindemittel eine möglichst geringe Viskosität und einen möglichst geringen Restgehalt von weniger als etwa 1 Gew.-% an leichtflüchtigen Diisocyanaten aufweist, wobei der Restgehalt an Ieichtflüchtigem Isocyanat im Falle von Toluylendiisocyanat (TDI) bei weniger als etwa 0,1 Gew.-% liegen sollte.

Eine weitere Aufgabe der Erfindung war es, eine klebstoffenthaltend ein Polyurethanbindemittel zur Verfügung zu stellen, der die Verarbeitung bei einer möglichst geringen Verarbeitungstemperatur erlaubt.

Eine weitere Aufgabe der Erfindung war es, einen klebstoff enthaltend ein Polyurethanbindemittel zur Verfügung zu stellen, der einen möglichst geringen Anteil an "Migraten" aufweist, d.h., einen möglichst geringen Anteil an monomeren Polyisocyanaten aufweist.

Eine weitere Aufgabe der Erfindung war es, einen klebstoff enthaltend ein Polyurethanbindemittel zur Verfügung zu stellen, mit dem sich Folienverbunde herstellen lassen, die auch bei hohen Temperaturen keine oder nur eine geringe Delaminationsneigung aufweisen.

Eine weitere Aufgabe der Erfindung war es, Verfahren zur Verfügung zu stellen, mit dem sich ein Polyurethanbindemittel mit den oben genannten Eigenschaften herstellen lässt.

Gegenstand der Erfindung ist ein verfahren zur Herstellung eines Monomeren, mindestens enthaltend Komponenten A und B, bei dem

Polyurethanbindemittels mit einem Gehalt an leichtflüchtigen, Isocyanatgruppen tragenden Monomeren, die bei 30 °C ein Dampfdruck von mehr als 0,0007 mm/Hg oder einen Siedepunkt von weniger als 190 °C (70 mPa) aufweisen, von weniger als 0,5 Gew.-% und mit einer Viskosität weniger als 5000 mPas, gemessen nach Brookfield RTDV II, Spindel 27, 20 U/min, 50 °C, enthaltend
a) mindestens zwei NCO-Gruppen tragende Polyurethan-Präpolymere, hergestellt durch eine zweistufige Reaktion, wobei in einer
   I. ersten Stufe aus einem mindestens difunktionellen Isocyanat und einer ersten Polyolkomponente ein Polyurethan-Präpolymeres herstellt wird, wobei das NCO/OH-Verhältnis kleiner als 2 ist und nach Abschluss der ersten Stufe im Polyurethan-Präpolymere noch freie OH-Gruppen vorliegen und
   II. in der zweiten Stufe ein weiteres, mindestens difunktionelles Isocyanat zusammen mit einer weiteren Polyolkomponente in Gegenwart des Polyurethan-Präpolymeren aus der ersten Stufe umgesetzt wird, wobei die NCO-Gruppen dieses Isocyanats eine höhere Reaktivität gegenüber mit Isocyanat reaktiven Verbindungen aufweisen als der überwiegende Anteil der im Polyurethan-Präpolymeren der ersten Stufe vorliegenden NCO-Gruppen und
   wobei dieses Isocyanat der zweiten Stufe im molaren Überschuss bezogen auf die freien OH-Gruppen der Mischung aus vorliegendem Präpolymer der ersten Stufe und der weiteren Polyol-Komponente der zweiten Stufe eingesetzt wird und
   wobei die mindestens zwei NCO-Gruppen tragenden Polyurethan-Präpolymere nach Abschluss der zweiten Stufe mindestens zwei Arten von NCO-Gruppen enthalten, die eine unterschiedliche Reaktivität aufweisen und
b) ein mindestens difunktionelles Isocyanat, dessen Molekulargewicht geringer ist als das Molekulargewicht der in Komponente A enthaltenen Polyurethan-Präpolymeren und dessen NCO-Gruppen eine höhere Reaktivität aufweisen als die in der ersten Stufe der Komponente A enthaltenen Art von NCO-Gruppen geringer Reaktivität, in einer Menge von mindestens 5 Gew.-%,
wobei die Komponente B nicht reagierte Anteile des mindestens difunktionellen Isocyanats der Komponente A in der zweiten Reaktionsstufe darstellt.

Unter "niedrigviskos" wird im Rahmen der vorliegenden Erfindung eine Viskosität (gemessen nach Brookfield) verstanden, die bei 50 °C weniger als 5000 mPas beträgt.

Unter dem Begriff "Polyurethanbindemittel" wird im Rahmen des vorliegenden Textes ein Gemisch von jeweils mindestens zwei Isocyanatgruppen aufweisenden Molekülen verstanden, in dem der Anteil an Molekülen mit einem Molekulargewicht von mehr als 500 mindestens etwa 50 Gew.-%, vorzugsweise mindestens etwa 60 Gew.-% oder etwa 70 Gew.-% beträgt.

Als Komponente A wird ein mindestens zwei Isocyanatgruppen tragendes Polyurethan-Präpolymeres, oder ein Gemisch aus zwei oder mehr mindestens zwei Isocyanatgruppen tragenden Polyurethan-Präpolymeren eingesetzt, das vorzugsweise durch die Umsetzung einer Polyolkomponente mit einem mindestens difunktionellen Isocyanat erhältlich ist.

Unter einem "Polyurethan-Präpolymeren" wird im Rahmen des vorliegenden Textes eine Verbindung verstanden, wie sie sich beispielsweise aus der Umsetzung einer Polyolkomponente mit einem mindestens difunktionellen Isocyanat ergibt. Der Begriff "Polyurethan-Präpolymeres" umfasst damit sowohl Verbindungen mit relativ niedrigem Molekulargewicht, wie sie beispielsweise aus der Umsetzung eines Polyols mit einem Überschuss an Polyisocyanat entstehen, es werden jedoch auch oligomere oder polymere Verbindungen mit umfasst. Ebenso vom Begriff "Polyurethan-Präpolymere" umschlossen sind Verbindungen, wie sie z.B. aus der Umsetzung eines 3-oder 4-wertigen Polyols mit einem molaren Überschuss an Diisocyanaten, bezogen auf das Polyol, gebildet werden. In diesem Fall trägt ein Molekül der resultierenden Verbindung mehrere Isocyanatgruppen.

Auf Polymere Verbindungen bezogene Molekulargewichtsangaben beziehen sich, soweit nichts anderes angegeben ist, auf das Zahlenmittel des Molekulargewichts (Mₙ).

In der Regel weisen die im Rahmen der vorliegenden Erfindung hergestellten Polyurethan-Präpolymeren ein Molekulargewicht von etwa 500 bis etwa 15.000, oder etwa 500 bis etwa 10.000, beispielsweise etwa 5.000, insbesondere jedoch etwa 700 bis etwa 2.500 auf.

Das zwei Isocyanatgruppen tragende Polyurethan-Präpolymere, oder das Gemisch aus zwei oder mehr Isocyanatgruppen tragenden Polyurethan-Präpolymeren, weist mindestens zwei unterschiedlich gebundene Arten von Isocyanatgruppen auf, wovon mindestens eine Art eine geringere Reaktivität gegenüber mit Isocyanaten reaktiven Gruppen aufweist als die andere Art oder die anderen Arten der Isocyanatgruppen. Isocyanatgruppen mit einer vergleichsweise geringeren Reaktivität gegenüber mit Isocyanaten reaktiven Gruppen (im Vergleich zu mindestens einer anderen im Polyurethanbindemittel vorliegenden Isocyanatgruppe) werden im folgenden Text auch als "weniger reaktive Isocyanatgruppen" bezeichnet, die entsprechende Isocyanatgruppe mit einer höheren Reaktivität gegenüber mit Isocyanatgruppen reaktiven Verbindungen wird auch als "reaktivere Isocyanatgruppe" bezeichnet.

Im Rahmen der vorliegenden Erfindung ist demnach beispielsweise ein difunktionelles Polyurethan-Präpolymeres als Komponente A einsetzbar, das zwei unterschiedlich gebundene Isocyanatgruppen aufweist, wobei eine der Isocyanatgruppen eine höhere Reaktivität gegenüber mit Isocyanaten reaktiven Gruppen aufweist als die andere Isocyanatgruppe. Ein solches Polyurethan-Präpolymeres ist beispielsweise aus der Umsetzung eines difunktionellen Alkohols mit zwei unterschiedlichen, beispielsweise difunktionellen, Isocyanatgruppen tragenden Verbindungen erhältlich, wobei die Umsetzung so durchgeführt wird, dass im Mittel jedes Molekül des difunktionellen Alkohols mit jeweils einem Molekül der unterschiedlichen Isocyanatgruppen tragenden Verbindungen reagiert.

Es ist ebenso möglich ein tri- oder höherfunktionelles Polyurethan-Präpolymeres als Komponente A einzusetzen, wobei ein Molekül des Polyurethan-Präpolymeren beispielsweise eine unterschiedliche Anzahl an weniger reaktiven und reaktiveren Isocyanatgruppen aufweisen kann.

Weiterhin im Rahmen der Erfindung als Komponente A einsetzbar sind Gemische von zwei oder mehr Polyurethan-Präpolymeren. Bei den genannten Gemischen kann es sich um Polyurethan-Präpolymere handeln, bei denen einzelne Moleküle jeweils identisch gebundene Isocyanatgruppen tragen, wobei insgesamt im Gemisch mindestens eine reaktivere und eine weniger reaktive Isocyanatgruppe vorliegen müssen. Es ist ebenso möglich, dass das Gemisch neben Molekülen, die eine oder mehrere identisch gebundene Isocyanatgruppen tragen, weitere Moleküle enthält, die sowohl eine oder mehrere identisch gebundene Isocyanatgruppen als auch eine oder mehrere verschieden gebundene Isocyanatgruppen tragen.

Das erfindungsgemäß hergestellte Polyurethanbindemittel enthält neben der Komponente A noch ein mindestens difunktionelles Isocyanat, dessen Molekulargewicht geringer ist, als das Molekulargewicht der in Komponente A enthaltenen Polyurethan-Präpolymeren, und dessen Isocyanatgruppen eine höhere Reaktivität gegenüber mit Isocyanaten reaktiven Verbindungen aufweisen als die in Komponente A enthaltene, weniger reaktive Art von Isocyanatgruppen.

In der Regel weist Komponente B ein Molekulargewicht von bis zu etwa 1000 auf, wobei Molekulargewichte von bis zu etwa 720 oder weniger, beispielsweise etwa 550, 500, 450, 400, oder darunter, bevorzugt sind. Als Komponente B eignen sich beispielsweise niedermolekulare Diisocyanate mit einem Molekulargewicht von bis zu etwa 300 oder die Umsetzungsprodukte di- oder höherfunktioneller Alkohole mit einer mindestens äquimolaren Menge an solchen niedermolekularen Diisocyanaten, bezogen auf die OH-Gruppen des di- oder höherfunktionellen Alkohols. Weiterhin als Komponente B geeignet, sind beispielsweise die Trimerisierungsprodukte difunktioneller Isocyanate, die Isocyanurate.

Das erfindungsgemäß hergestellte Polyurethanbindemittel enthält mindestens 5 Gew.-% der Komponente B, bezogen auf das gesamte Polyurethanbindemittel.

Das erfindungsgemäß hergestellte Polyurethanbindemittel weist vorzugsweise einen Gehalt an leichtflüchtigen, Isocyanatgruppen tragenden Monomeren, von weniger als 2 Gew.-% oder weniger als 1 Gew.-% oder bevorzugt weniger als 0,5 Gew.-% auf. Diese Grenzen gelten insbesondere für leicht-flüchtige Isocyanatverbindungen, die nur ein beschränktes Gefährdungspotential für mit ihrer Verarbeitung beschäftigte Personen aufweisen, beispielsweise für Isophorondiisocyanat (IPDI), Hexamethylendiisocyanat (HDI), Tetramethylxylylendiisocyanat (TMXDI) oder Cyclohexandiisocyanat. Bei bestimmten leicht-flüchtigen Isocyanatverbindungen, insbesondere solchen, die ein hohes Gefährdungspotential für mit ihrer Verarbeitung beschäftigte Personen aufweisen, beträgt deren Gehalt im Polyurethanbindemittel bevorzugt weniger als 0,3 Gew.-% und besonders bevorzugt weniger als 0,1 Gew.-%. Zu den letztgenannten Isocyanatverbindungen gehört insbesondere Toluylendiisocyanat (TDI). In einer weiteren, bevorzugten Ausführungsform der Erfindung weist das Polyurethanbindemittel einen Gehalt an TDI und HDI von weniger als 0,05 Gew.-% auf.

In einer bevorzugten Ausführungsform der Erfindung kann das erfindungsgemäß hergestellte Polyurethanbindemittel zusätzlich zu den Komponenten A und B als Komponente H ein mindestens trifunktionelles Isocyanat enthalten.

Als mindestens trifunktionelle Isocyanate geeignet sind beispielsweise die Tri- und Oligomerisierungsprodukte der bereits oben erwähnten Polyisocyanate, wie sie unter Bildung von Isocyanuratringen durch geeignete Umsetzung von Polyisocyanaten, vorzugsweise von Diisocyanaten, erhältlich sind. Werden Oligomerisierungsprodukte eingesetzt, so eignen sich insbesondere diejenigen Oligomerisierungsprodukte mit einem Oligomerisierungsgrad von durchschnittlich etwa 3 bis etwa 5.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Ebenfalls zum Einsatz als Komponente H geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Im Rahmen einer bevorzugten Ausführungsform der Erfindung wird beispielsweise Desmodur N 3300, Desmodur N 100, das IPDI-trimäre Isocyanurat T 1890 (Hersteller: Bayer AG) oder Triphenylmethantriisocyanat eingesetzt werden.

Die Komponente H wird vorzugsweise in einer Menge von etwa 1 bis etwa 30 Gew.-%, insbesondere zwischen etwa 5 und etwa 25 Gew.-%, beispielsweise etwa 12 bis etwa 20 Gew.-%, eingesetzt.

In einer weiteren bevorzugten Ausführungsform wird Komponente A durch eine mindestens zweistufige Reaktion hergestellt, bei der
(e) in einer ersten Stufe aus einem mindestens difunktionellen Isocyanat und mindestens einer ersten Polyolkomponente ein Polyurethan-Präpolymeres hergestellt wird, wobei das NCO/OH-Verhältnis kleiner als 2 ist und im Polyurethan-Präpolymeren noch freie OH-Gruppen vorliegen,
   und
(f) in einer zweiten Stufe ein weiteres mindestens difunktionelles Isocyanat und eine weitere Polyolkomponente mit dem Polyurethan-Präpolymeren aus der ersten Stufe umgesetzt wird,
   wobei die Isocyanatgruppen des in der zweiten Stufe zugesetzten Isocyanats eine höhere Reaktivität gegenüber mit Isocyanaten reaktiven Verbindungen aufweisen, als mindestens der überwiegende Anteil der im Polyurethan-Präpolymeren aus der ersten Stufe vorliegenden Isocyanatgruppen.

In einer weiteren bevorzugten Ausführungsform wird das weitere mindestens difunktionelle Isocyanat im molaren Überschuss, bezogen auf freie OH-Gruppen der Komponente A und der weiteren Polyolkomponente, zugegeben, wobei der nicht mit OH-Gruppen reagierende Anteil des weiteren mindestens difunktionellen Isocyanats Komponente B darstellt.

Es ist im Rahmen der vorliegenden Erfindung bevorzugt, wenn bei der Herstellung der Komponente A in der zweiten Stufe das Verhältnis OH : NCO etwa 0,001 bis weniger als 1, insbesondere 0,005 bis etwa 0,8 beträgt.

In einer bevorzugten Ausführungsform der vorliegenden Erfindung beträgt das Verhältnis OH : NCO in der zweiten Stufe etwa 0,2 bis 0,6

In einer weiteren bevorzugten Ausführungsform der Erfindung beträgt in der ersten Stufe das Verhältnis OH : NCO weniger als 1, insbesondere 0,5 bis 0,7, wobei gegebenenfalls die beschriebenen Verhältnisse für die zweite Stufe ebenfalls eingehalten werden können.

Der Begriff "Polyolkomponente" umfasst im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h. eine Verbindung mit mehr als einer OH-Gruppe im Molekül.

Als Polyolkomponente zur Herstellung der Komponente A kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glycerin, Trimethylolpropan, Pentaerythrit sowie oligomere Ether der genannten Substanzen mit sich selbst oder im Gemisch aus zwei oder mehr der genannten Ether untereinander.

Weiterhin können als Polyolkomponente zur Herstellung der Komponente A die Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen oder Hexandiolen mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Besonders geeignet sind Polyetherpolyole mit einem Molekulargewicht von etwa 100 bis etwa 10.000, vorzugsweise von etwa 200 bis etwa 5.000. Ganz besonders bevorzugt ist im Rahmen der vorliegenden Erfindung Polypropylenglykol mit einem Molekulargewicht von etwa 300 bis etwa 2.500. Ebenfalls als Polyolkomponente zur Herstellung der Komponente A geeignet sind Polyetherpolyole, wie sie beispielsweise aus der Polymerisation von Tetrahydrofuran entstehen.

Die Polyether werden in dem Fachmann bekannter Weise durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt.

Geeignete Startverbindungen sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen, oder Gemische aus zwei oder mehr davon.

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Ebenfalls als Polyolkomponente für die Herstellung von Komponente A geeignet, sind Polyesterpolyole mit einem Molekulargewicht von etwa 200 bis etwa 10.000. So können beispielsweise Polyesterpolyole verwendet werden, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglycol, Diethylenglycol oder Neopentylglycol oder Gemische aus zwei oder mehr davon. Besonders geeignete Säuren sind Isophthalsäure oder Adipinsäure oder deren Gemisch.

Im Rahmen der vorliegenden Erfindung besonders bevorzugt als Polyolkomponente zur Herstellung der Komponente A eingesetzte Polyole sind beispielsweise -Dipropylenglykol und/oder Polypropylenglykol mit einem Molekulargewicht von etwa 400 bis etwa 2500, sowie Polyesterpolyole, bevorzugt Polyesterpolyole erhältlich durch Polykondensation von Hexandiol, Ethylenglycol, Diethylenglycol oder Neopentylglycol oder Gemischen aus zwei oder mehr davon und Isophthalsäure oder Adipinsäure, oder deren Gemische.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhy-drid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfett-säure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Die Polyester können gegebenenfalls einen geringen Anteil an Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Weiterhin als Polyole zur Herstellung der Komponenten A und B geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente zur Herstellung der Komponenten A geeignet, sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Zur Herstellung der Komponenten A wird die entsprechende Polyolkomponente jeweils mit einem mindestens difunktionellen Isocyanat umgesetzt. Als mindestens difunktionelles Isocyanat kommt sowohl zur Herstellung der Komponente A grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen, bevorzugt.

Nachfolgend werden mindestens difunktionelle Isocyanate beschrieben, die als das mindestens difunktionelle Isocyanat zur Herstellung der Komponenten A geeignet sind.

Beispielsweise sind dies: Ethylendiisocyanat, 1,4-Tetramethylendiisocyanat, 1,6-Hexamethylendiisocyanat (HDI), Cyclobutan-1,3-diisocyanat, Cyclohexan-1,3- und -1,4-diisocyanat sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Tetramethylxylylendiisocyanat (TMXDI), 1,3- und 1,4-Phenylendiisocyanat, 2,4- oder 2,6-Toluylendiisocyanat, Diphenylmethan-2,4'-diisocyanat, Diphenylmethan-2,2'-di-isocyanat oder Diphenylmethan-4,4'-diisocyanat oder Gemische aus zwei oder mehr der genannten Diisocyanate.

Ebenso im Sinne der vorliegenden Erfindung als Isocyanate zur Herstellung der Komponente A geeignet sind drei- oder höherwertige Isocyanate, wie sie beispielsweise durch Oligomerisierung von Diisocyanaten erhältlich sind. Beispiele für solche drei- und höherwertigen Polyisocyanate sind die Triisocyanurate von HDI oder IPDI oder deren Gemische oder deren gemischte Triisocyanurate.

In einer bevorzugten Ausführungsform der Erfindung werden zur Herstellung der Komponente A Diisocyanate eingesetzt, die zwei Isocyanatgruppen mit unterschiedlicher Reaktivität aufweisen. Beispiele für solche Diisocyanate sind 2,4- und 2,6-Toluylendiisocyanat (TDI) und Isophorondiisocyanat (IPDI). Bei solchen nicht symmetrischen Diisocyanaten reagiert in der Regel eine Isocyanatgruppe deutlich schneller mit gegenüber Isocyanaten reaktiven Gruppen, beispielsweise OH-Gruppen, während die verbleibende Isocyanatgruppe vergleichsweise reaktionsträge ist. In einer bevorzugten Ausführungsform wird daher zur Herstellung der Komponente A ein monocyclisches, nicht- symmetrisches Diisocyanat eingesetzt, das über zwei Isocyanatgruppen der beschriebenen, unterschiedlichen Reaktivität verfügt.

Besonders bevorzugt ist zur Herstellung der Komponente A der Einsatz von 2,4- oder 2,6-Toluylendiisocyanat (TDI) oder einem Gemisch der beiden Isomeren, insbesondere jedoch der Einsatz von reinem 2,4-TDI.

Die Herstellung der Komponente B erfolgt unter Verwendung eines mindestens difunktionellen Isocyanats, das gewährleistet, dass zumindest der Überwiegende Anteil der nach Abschluss der Umsetzung mit der Polyolkomponente verbleibenden Isocyanatgruppen der Komponente B reaktiver ist als der überwiegende Anteil der in Komponente A vorliegenden Isocyanatgruppen. Vorzugsweise werden zur Herstellung der Komponente B difunktionelle Isocyanate eingesetzt, deren Isocyanatgruppen eine weitgehend identische Reaktivität aufweisen. Insbesondere sind dies die symmetrischen Isocyanate, wobei die symmetrischen, aromatischen difunktionellen Isocyanate bevorzugt sind. Ganz besonders bevorzugt zur Herstellung der Komponente B sind die bicyclischen, aromatischen, symmetrischen Diisocyanate der Diphenylmethanreihe, insbesondere MDI.

Ein Polyurethanbindemittel mit den erfindungsgemäßen Vorteilen kann prinzipiell auf beliebige Weise hergestellt werden. Als besonders vorteilhaft haben sich jedoch zwei Verfahren erwiesen, die nachfolgend beschrieben werden.

Es ist beispielsweise möglich, das Polyurethanbindemittel direkt durch die Herstellung der Komponente A, mit einer nachträglichen Zugabe der Komponente B zu erzeugen.

Es ist jedoch ebenfalls möglich, die als Komponente B gewünschte Verbindung schon bei der Herstellung der Komponente A einzusetzen und in einem solchen Überschuss zuzugeben, dass der gewünschte Endgehalt an Komponente B erreicht wird.

Ein weiterer Gegenstand der Erfindung ist daher ein Verfahren zur Herstellung eines niedrigviskosen, Isocyanatgruppen tragenden Polyurethanbindemittels, umfassend mindestens zwei Stufen, bei dem
(g) in einer ersten Stufe aus einem mindestens difunktionellen Isocyanat und mindestens einer Polyolkomponente ein Polyurethan-Präpolymeres hergestellt wird
   und
(h) in einer zweiten Stufe ein weiteres mindestens difunktionelles Isocyanat, oder ein weiteres mindestens difunktionelles Isocyanat und eine weitere Polyolkomponente, in Gegenwart des Polyurethan-Präpolymeren umgesetzt wird,
wobei der überwiegende Anteil der nach Abschluss der ersten Stufe vorliegenden Isocyanatgruppen eine geringere Reaktivität gegenüber mit Isocyanaten reaktiven Gruppen, insbesondere gegenüber OH-Gruppen, aufweist als die Isocyanatgruppen des in der zweiten Stufe zugesetzten mindestens difunktionellen Isocyanats und in der zweiten Stufe das Verhältnis OH : NCO etwa 0,2 bis etwa 0,6 beträgt.

Als eine weitere Polyolkomponente können prinzipiell alle schon im Rahmen dieses Textes genannten Polyolkomponente eingesetzt werden.

Es ist vorteilhaft, wenn in der ersten Stufe des erfindungsgemäßen Verfahrens das Verhältnis OH : NCO weniger als 1 beträgt. Das Verhältnis von OH-Gruppen zu Isocyanatgruppen beträgt in einer bevorzugten Ausführungsform in der ersten Stufe etwa 0,4 bis etwa 0,7, insbesondere mehr als 0,5 bis etwa 0,7.

Die Umsetzung einer Polyolkomponente mit dem mindestens difunktionellen Isocyanat in einer ersten Stufe kann in jeder dem Fachmann bekannten Weise nach den allgemeinen Regeln der Polyurethanherstellung erfolgen. Die Umsetzung kann beispielsweise in Gegenwart von Lösemitteln erfolgen. Als Lösemittel sind grundsätzlich alle üblicherweise in der Polyurethanchemie benutzten Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Wenn die Reaktionskomponenten selbst flüssig sind oder wenigstens eine oder mehrere der Reaktionskomponenten eine Lösung oder Dispersion weiterer, nicht ausreichend flüssiger Reaktionskomponenten bilden, so kann auf den Einsatz von Lösemitteln ganz verzichtet werden. Eine solche lösemittelfreie Reaktion ist im Rahmen der vorliegenden Erfindung bevorzugt.

Zur Durchführung der ersten Stufe des erfindungsgemäßen Verfahrens wird das Polyol, gegebenenfalls zusammen mit einem geeigneten Lösemittel, in einem geeigneten Gefäß vorgelegt und gemischt. Anschließend erfolgt unter Fortführung des Mischens die Zugabe des mindestens difunktionellen Isocyanats. Zur Beschleunigung der Reaktion wird üblicherweise die Temperatur erhöht. In der Regel wird auf etwa 40 bis etwa 80°C temperiert. Die einsetzende, exotherme Reaktion sorgt anschließend für ein Ansteigen der Temperatur. Die Temperatur des Ansatzes wird bei etwa 70 bis etwa 110° C beispielsweise bei etwa 85 bis 95° C oder insbesondere bei etwa 75 bis etwa 85° C gehalten, gegebenenfalls erfolgt die Einstellung der Temperatur durch geeignete äußere Maßnahmen, beispielsweise Heizen oder Kühlen.

Gegebenenfalls können zur Beschleunigung der Reaktion in der Polyurethanchemie übliche Katalysatoren zum Reaktionsgemisch zugesetzt werden. Bevorzugt ist die Zugabe von Dibutylzinndilaurat oder Diazabicyclooctan (DABCO). Wenn ein Katalysatoreinsatz gewünscht ist, wird der Katalysator in der Regel in eine Menge von etwa 0,005 Gew.-% oder etwa 0,01 Gew.-% bis etwa 0,2 Gew.-%, bezogen auf den gesamten Ansatz, dem Reaktionsgemisch zugegeben.

Die Reaktionsdauer für die erste Stufe hängt von der eingesetzten Polyolkomponente, vom eingesetzten mindestens difunktionellen Isocyanat, von der Reaktionstemperatur sowie vom gegebenenfalls vorhandenen Katalysator ab. Üblicherweise beträgt die Gesamtreaktionsdauer etwa 30 Minuten bis etwa 20 Stunden.

Vorzugsweise wird als das mindestens difunktionelle Isocyanat in der ersten Stufe Isophorondiisocyanat (IPDI), Tetramethylxylylendiisocyanat (TMXDI), hydriertes Diphenylmethandiisocyanat (MDI_{H12}) oder Toluylendiisocyanat (TDI) oder ein Gemisch aus zwei oder mehr davon eingesetzt. Zur Durchführung der zweiten Stufe des erfindungsgemäßen Verfahrens wird im Gemisch mit der in der ersten Stufe erhaltenen Komponente A mindestens ein weiteres mindestens difunktionelles Isocyanat mit einer weiteren Polyolkomponente umgesetzt. Als Bestandteil der weiteren Polyolkomponente kann dabei jedes Polyol aus der Gruppe der im Laufe dieses Textes oben stehend aufgezählten Polyole oder ein Gemisch aus zwei oder mehr davon, eingesetzt werden. Vorzugsweise wird jedoch im Rahmen der zweiten Stufe des erfindungsgemäßen Verfahrens als Polyolkomponente ein Polypropylenglycol mit einem Molekulargewicht von etwa 400 bis etwa 2500, oder ein Polyesterpolyol mit mindestens einem hohen, insbesondere einem überwiegenden Anteil an aliphatischen Dicarbonsäuren, oder ein Gemisch dieser Polyole eingesetzt.

Als mindestens difunktionelles Isocyanat wird in der zweiten Stufe des erfindungsgemäßen Verfahrens mindestens ein Polyisocyanat eingesetzt, dessen Isocyanatgruppen eine höhere Reaktivität aufweisen als die Mehrzahl der sich im Präpolymeren befindlichen Isocyanatgruppen. Das heißt, es können im Präpolymeren durchaus noch reaktive Isocyanatgruppen vorliegen, die vom ursprünglich zur Herstellung des Präpolymeren A eingesetzten mindestens difunktionellen Isocyanat stammen, erfindungswesentlich ist in diesem Zusammenhang lediglich, dass der überwiegende Anteil der im Präpolymeren A befindlichen Isocyanatgruppen eine geringere Reaktivität aufweist als die Isocyanatgruppen des weiteren mindestens difunktionellen Isocyanats, das in der zweiten Stufe des erfindungsgemäßen Verfahrens zugegeben wird.

Als das weitere mindestens difunktionelle Isocyanat wird vorzugsweise ein bicyclisches, aromatisches, symmetrisches Diisocyanat eingesetzt. Zu den bicyclischen Isocyanaten gehören beispielsweise die Diisocyanate der Diphenylmethan-Reihe, insbesondere das 2,2'-Diphenylmethandiisocyanat, 2,4'-Diphenylmethandiisocyanat und 4,4'-Diphenylmethandiisocyanat. Unter den genannten Diisocyanaten ist der Einsatz von Diphenylmethandiisocyanat, insbesondere 4,4'-Diphenylmethandiisocyanat, als das weitere mindestens difunktionelle Isocyanat im Rahmen der zweiten Stufe des erfindungsgemäßen Verfahrens besonders bevorzugt.

Das weitere mindestens difunktionelle Isocyanat wird in der zweiten Stufe in einer Menge von etwa 5 bis etwa 95 Gew.-%, vorzugsweise etwa 20 bis etwa 95 Gew.-% und insbesondere in einer Menge von etwa 40 bis etwa 90 Gew.-%, bezogen auf die Gesamtmenge der eingesetzten Polyisocyanate in allen Stufen des erfindungsgemäßen Verfahrens, eingesetzt.

In einer bevorzugten Ausführungsform beträgt in der zweiten Stufe das Verhältnis OH : NCO etwa 0,2 bis etwa 0,6, insbesondere bis etwa 0,5. Hierunter ist das Verhältnis OH : NCO der in der zweiten Stufe zugesetzten Komponenten zu verstehen, aus dem Präpolymeren A stammende Isocyanatgruppen bleiben hier unberücksichtigt.

Die erfindungsgemäß hergestellten Polyurethanbindemittel weisen vorzugsweise eine Viskosität von weniger als 5000 mPas (gemessen mit Brookfield RT DVII (Thermosell), Spindel 27, 20 U/min, 50°C) auf.

In einer bevorzugten Ausführungsform der Erfindung kann im Anschluss an die bereits beschriebenen beiden Stufen noch ein weiteres, mindestens trifunktionelles Isocyanat als Komponente H zugegeben werden. Als mindestens trifunktionelle Isocyanate geeignet sind die bereits weiter oben beschriebenen Polyisocyanate mit mindestens drei NCO-Gruppen bzw. die Tri- und Polymerisierungsprodukte der oben angegebenen difunktionellen Isocyanate.

Die erfindungsgemäß hergestellten Polyurethanbindemittel zeichnen sich insbesondere dadurch aus, dass sie einen äußerst geringen Gehalt an leichtflüchtigen, Isocyanatgruppen tragenden Monomeren aufweisen, der weniger als 2 Gew.-%, oder weniger als 1 Gew.-%, weniger als 0,5 Gew.-% und insbesondere weniger als etwa 0,1 Gew.-% beträgt. Es ist dabei besonders hervorzuheben, dass das erfindungsgemäße Verfahren ohne separate Verfahrensschritte zur Entfernung leicht-flüchtiger Diisocyanatkomponenten auskommt.

Ein weiterer Vorteil der nach dem erfindungsgemäßen Verfahren hergestellten Polyurethanbindemittel liegt darin begründet, dass sie eine Viskosität aufweisen, die in einem zur Verarbeitung sehr günstigen Bereich liegt. Die Viskosität der nach dem erfindungsgemäßen Verfahren hergestellten Polyurethanbindemittel beträgt insbesondere weniger als 5000 mPas (gemessen mit Brookfield RT DVII (Thermosell), Spindel 27, 20 U/min, 50°C).

Die erfindungsgemäß hergestellten Polyurethanbindemittel eignen sich in Substanz oder als Lösung in organischen Lösemitteln, beispielsweise in Lösemitteln wie sie vorstehend beschrieben wurden, zum Beschichten von Gegenständen, insbesondere zum Verkleben von Gegenständen.

Gegenstand der Erfindung ist daher auch die Verwendung eines Polyurethanbindemittels, das nach einem erfindungsgemäßen Verfahren hergestellt wurde, bei der Herstellung von Klebstoffen, insbesondere Ein-und Zweikomponentenklebstoffen, Beschichtungen, insbesondere Lacken, Dispersionsfarben und Gießharzen sowie Formkörpern, sowie zur Beschichtung und insbesondere Verklebung von Gegenständen, insbesondere zur Verklebung von Folien und zur Herstellung von Folienverbundwerkstoffen.

Das nach einem der erfindungsgemäßen Verfahren hergestellte Polyurethanbindemittel wird insbesondere zur Verkleben von Kunststoffen und besonders bevorzugt zum Kaschieren von Kunststofffolien, von mit Metall oder mit Metalloxiden bedampften Kunststofffolien, sowie von Metallfolien, insbesondere von Aluminiumfolien, eingesetzt.

Die Aushärtung, d. h. die Vernetzung der einzelnen Polyurethanbindemittelmoleküle über die freien Isocyanatgruppen, kann ohne Zugabe von Härter lediglich durch Luftfeuchtigkeit bewirkt werden. Es ist jedoch bevorzugt, wenn als Härter polyfunktionelle Vernetzer, beispielsweise Amine oder insbesondere polyfunktionelle Alkohole, zugegeben werden (ZweiKomponenten-Systeme).

Mit den erfindungsgemäß hergestellten Produkten hergestellte Folienverbunde zeigen hohe Verarbeitungssicherheit beim Heißsiegeln. Dies ist auf den verminderten Anteil migrationsfähiger, niedermolekularer Produkte in den Polyurethanbindemitteln zurückzuführen. Eine vorteilhafte Verarbeitungstemperatur für die erfindungsgemäß hergestellten Klebstoffe liegt bei derartigen Verfahren zwischen etwa 30 und etwa 90°C.

Ebenfalls Gegenstand der Erfindung ist ein Klebstoff, enthaltend zwei Komponenten F und G, wobei
(i) ein Isocyanatgruppen aufweisendes Polyurethanbindemittel, hergestellt gemäß dem erfindungsgemäßen Verfahren, als Komponente F,
   und
(j) eine Verbindung mit mindestens zwei gegenüber den Isocyanatgruppen der Komponente F reaktionsfähigen funktionellen Gruppen mit einem Molekulargewicht von bis zu 2.500, oder ein Gemisch aus zwei oder mehr solcher Verbindungen, als Komponente G,
eingesetzt wird.

Als Komponente F ist damit ein beliebiges, Polyurethanbindemittel einsetzbar, wie es im Rahmen des vorstehenden Textes beschrieben ist.

Als Komponente G wird vorzugsweise eine Verbindung mit mindestens zwei gegenüber den Isocyanatgruppen der Komponente F reaktionsfähigen funktionellen Gruppen mit einem Molekulargewicht von bis zu 2.500, oder ein Gemisch aus zwei oder mehr solcher Verbindungen, eingesetzt. Als mindestens zwei gegenüber den Isocyanatgruppen der Komponente F reaktionsfähige funktionellen Gruppen eignen sich insbesondere Aminogruppen, Mercaptogruppen oder OH-Gruppen, wobei Verbindungen, die in Komponente G einsetzbar sind, Aminogruppen, Mercaptogruppen oder OH-Gruppen jeweils ausschließlich, oder im Gemisch aufweisen können.

Die Funktionalität der in Komponente G einsetzbaren Verbindungen beträgt in der Regel mindestens etwa zwei. Vorzugsweise weist Komponente G einen Anteil an höherfunktionellen Verbindungen, beispielsweise mit einer Funktionalität von drei, vier oder mehr, auf. Die gesamte (durchschnittliche) Funktionalität der Komponente G beträgt beispielsweise etwa zwei (z.B. wenn nur difunktionelle Verbindungen als Komponente G eingesetzt werden), oder mehr, beispielsweise etwa 2,1, 2,2, 2,5, 2,7, oder 3. Gegebenenfalls kann Komponente G eine noch höhere Funktionalität aufweisen, beispielsweise etwa 4 oder mehr.

Vorzugsweise enthält Komponente G ein mindestens zwei OH-Gruppen tragendes Polyol. Zum Einsatz in Komponente G sind alle im Rahmen des vorliegenden Textes erwähnten Polyole geeignet, sofern sie das einschränkende Kriterium der Obergrenze des Molekulargewichts erfüllen.

Komponente G wird in der Regel in einer Menge eingesetzt, dass das Verhältnis von Isocyanatgruppen der Komponente F zu mit Isocyanatgruppen der Komponente F reaktionsfähigen, funktionellen Gruppen in Komponente G etwa 5:1 bis etwa 1:1, insbesondere etwa 2:1 bis etwa 1:1 beträgt.

Der erfindungsgemäße Klebstoff weist in der Regel eine Viskosität von etwa 250 bis etwa 10.000 mPas, insbesondere etwa 500 bis etwa 8.000 oder bis etwa 5.000 mPas (Brookfield RVT DVII, Spindel 27, 20 Upm, 40°C) auf.

Gegebenenfalls kann der erfindungsgemäße Klebstoff noch Zusatzstoffe enthalten. Die Zusatzstoffe können am gesamten Klebstoff einen Anteil von bis zu etwa 30 Gew.-% aufweisen.

Zu den im Rahmen der vorliegenden Erfindung einsetzbaren Zusatzstoffen zählen beispielsweise Weichmacher, Stabilisatoren, Antioxidantien, Farbstoffe, Photostabilisatoren oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)-propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Weitere Zusatzstoffe können in die erfindungsgemäßen Klebstoffe mitaufgenommen werden um bestimmte Eigenschaften zu variieren. Darunter können beispielsweise Farbstoffe wie Titandioxid, Füllstoffe wie Talkum, Ton und dergleichen sein. Gegebenenfalls können in den erfindungsgemäßen Klebstoffen geringe Mengen an thermoplastischen Polymeren oder Copolymeren vorliegen, beispielsweise Ethylenvinylacetat (EVA), Ethylenacrylsäure, Ethylenmethacrylat und Ethylen-n-butylacrylatcopolymere, die dem Klebstoff gegebenenfalls zusätzliche Flexibilität, Zähigkeit und Stärke verleihen. Es ist ebenfalls möglich, und im Rahmen der vorliegenden Erfindung bevorzugt, bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche die Benetzbarkeit der Klebstoffe erhöhen.

Die Erfindung wird nachfolgend durch Beispiele erläutert, die jedoch keine beschränkende Wirkung ausüben.

### Beispiele

Liste der benutzten Abkürzungen:

| | | |
|---|---|---|
| DPG | = | Dipropylenglykol |
| PPG | = | Polypropylenglykol |
| TDI | = | Toluylendiisocyanat (2,4-Isomer) |
| MDI | = | 4,4'-Diphenylmethandiisocyanat |
| PE | = | Polyester auf Basis Isophthalsäure/Adipinsäure/Diethylenglykol/ Dipropylenglykol |
| NCO | = | Isocyanatgruppengehalt |
| OHZ | = | OH-Zahl |
| M | = | Molekulargewicht |
| d | = | Tag |
| Verh. | = | Verhältnis |
| VH | = | Verbundhaftung |
| SNH | = | Siegelnahthaftung |
| OPA | = | Orientiertes Polyamid |
| PE_{KO88} | = | LLDPE/LDPE-Blend, Dicke: ca. 70µm, Fa. Mildenberger und Willing |

Die Beispiele 1 bis 9 wurden nach folgendem Verfahren hergestellt:

Die Polyolkomponenten der ersten Stufe wurden vorgelegt und homogen gemischt. Anschließend wurde das Isocyanat hinzugegeben und die Temperatur des Reaktionsgemischs auf 50°C erhöht. Die Temperatur stieg anschließend durch die exotherme Reaktion zwischen Isocyanatgruppen und OH-Gruppen stark an und wurde nach Erreichen von 90°C durch Kühlen auf dieser Temperatur gehalten.

Die Komponenten für die zweite Stufe wurden zum Reaktionsprodukt der ersten Stufe zugegeben und das Gemisch auf eine Temperatur von 85°C eingestellt. Man ließ eine weitere Stunde rühren.

In Beispiel 9 werden die erste und zweite Stufe jeweils getrennt hergestellt und die so erhaltenen Produkte nachträglich gemischt.

Beispiels 10, 11 und 12 wurden mit Isophorondiisocyanat (IPDI) als erste Isocyanatkomponente durchgeführt.

Die Ergebnisse sind der nachfolgenden Tabelle 1 zu entnehmen.

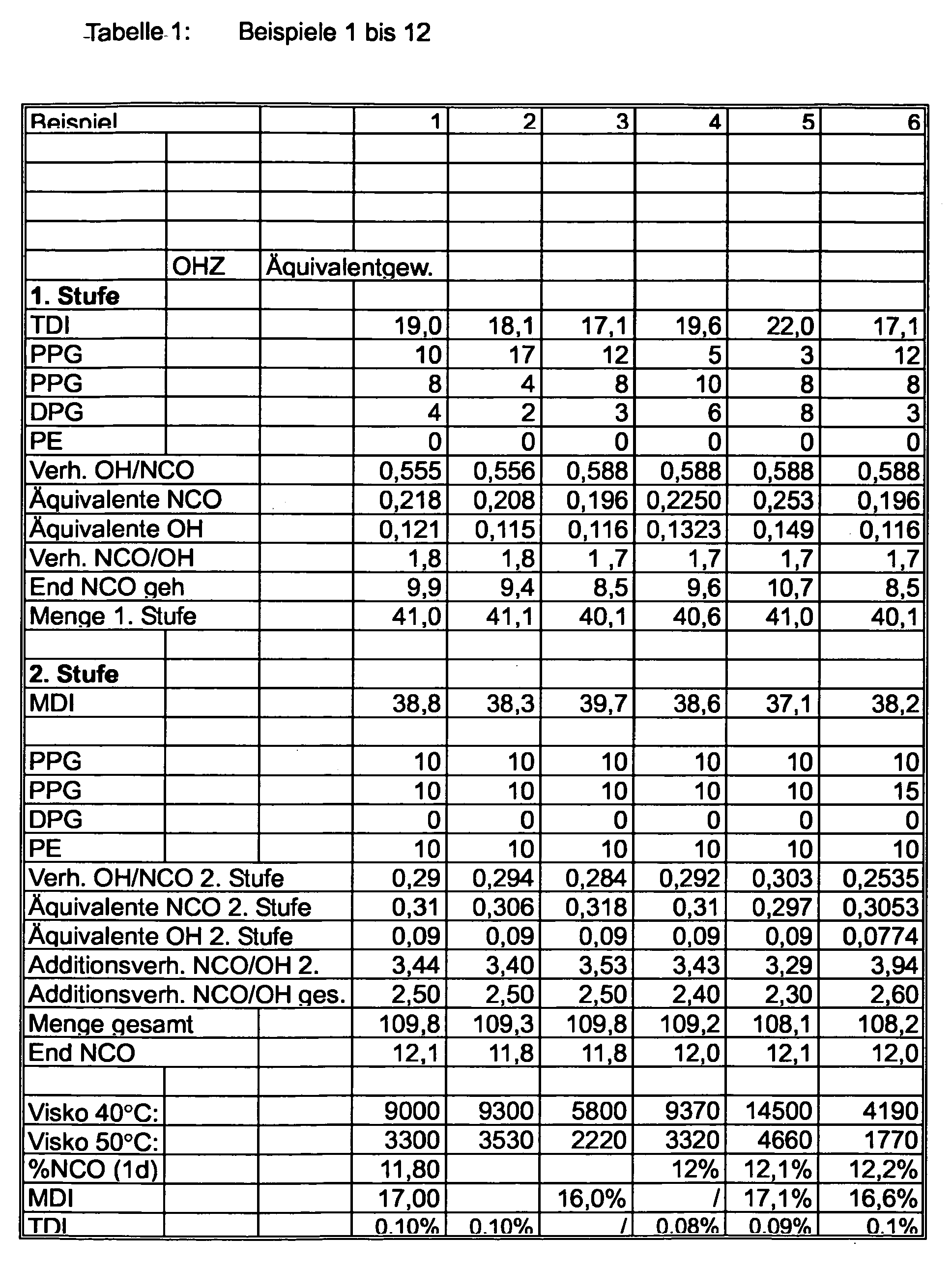

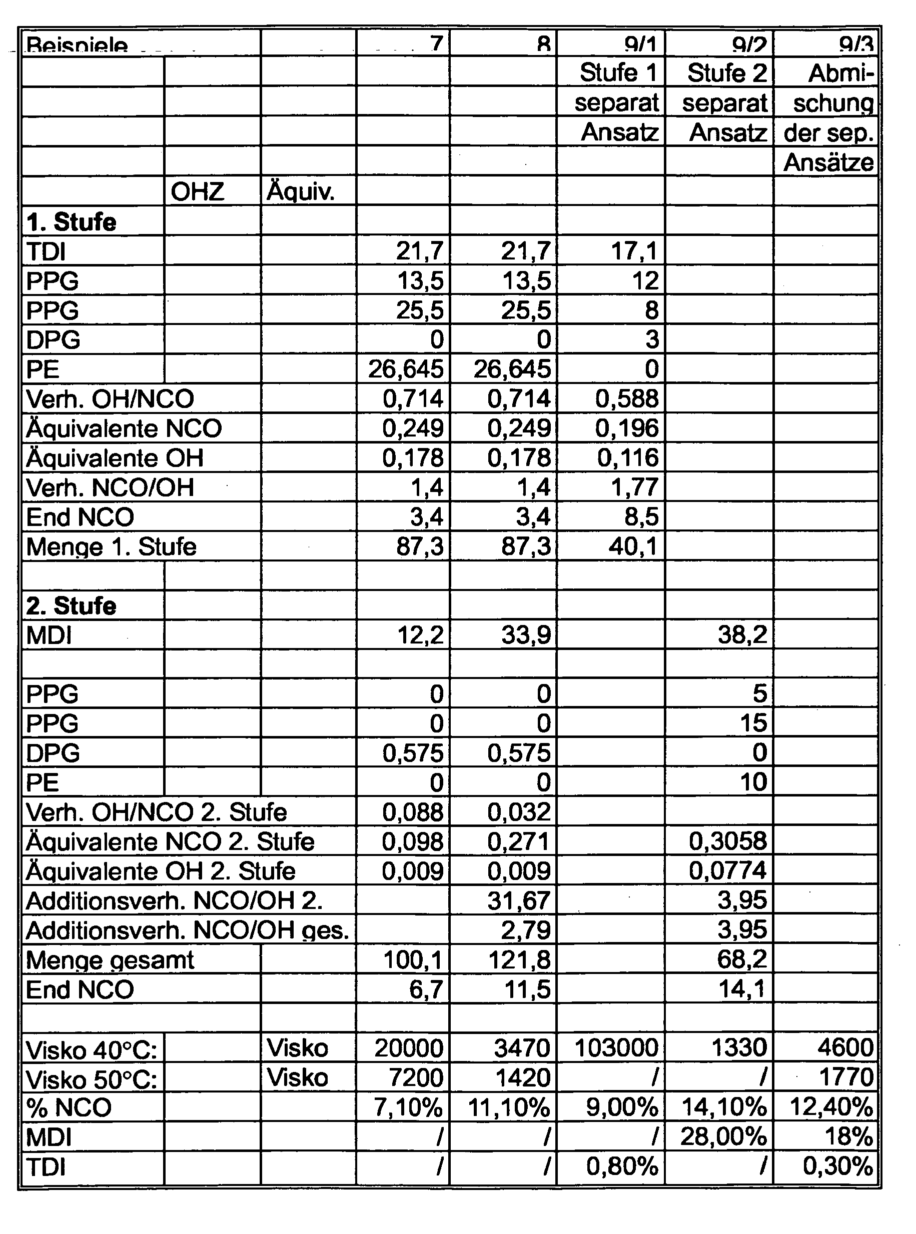

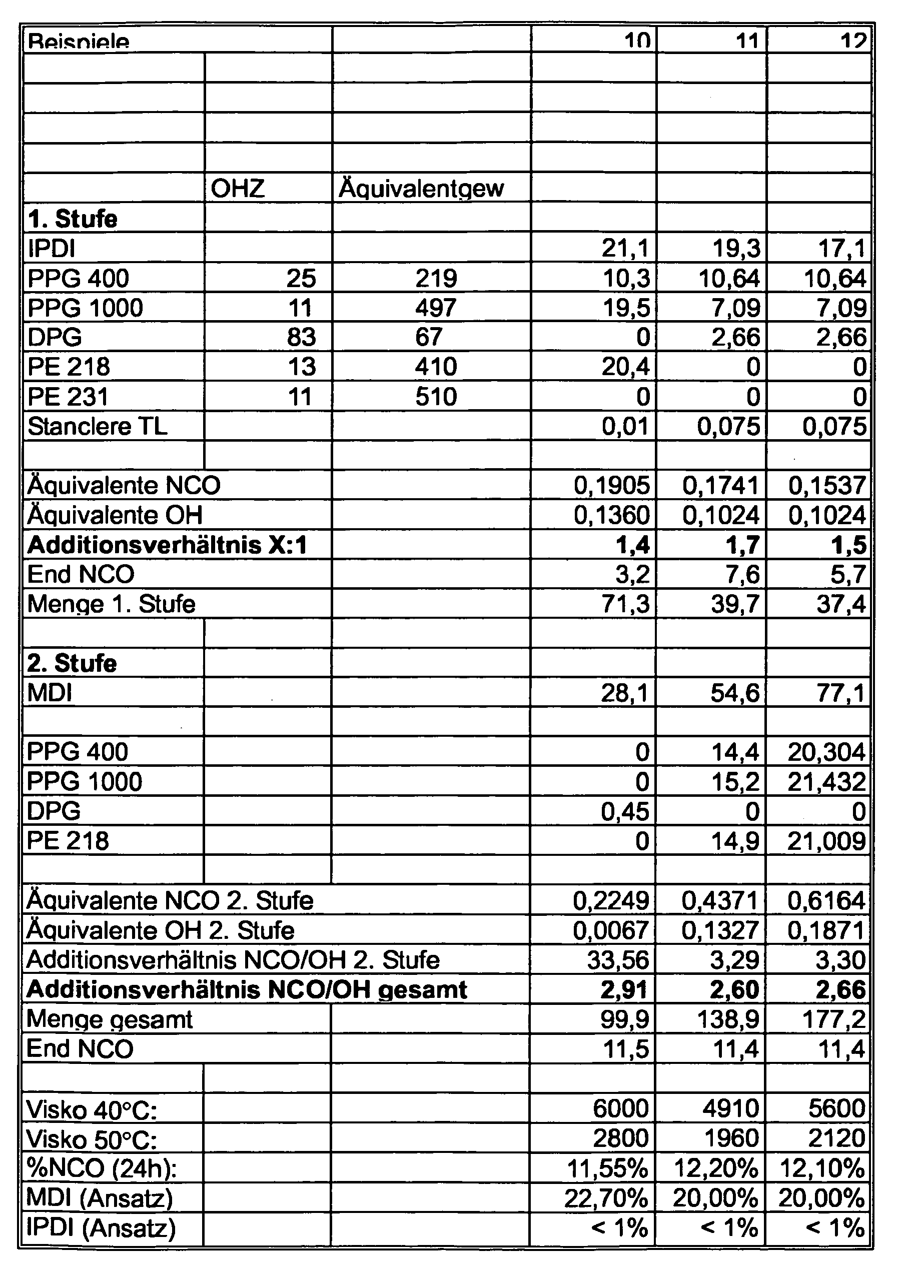

**Tabelle 2:**

| Beispiel | | | 13 |
|---|---|---|---|
| | OHZ | Äquivalentgew. | |
| 1. Stufe | | | |
| TDI | | | 15,7 |
| PPG400 | 265 | 212 | 9,9 |
| PPG1000 | 111 | 506 | 6,6 |
| PPG2000 | 55 | 1020 | 8,58 |
| DPG | 835 | 67 | 2,502 |
| | | | |
| Äquivalente NCO | | | 0,1803 |
| Äquivalente OH | | | 0,1054 |
| **Additionsverhältnis X:1** | | | **1,71** |
| End NCO | | | 7,3 |
| Menge 1. Stufe | | | 43,3 |
| | | | |
| 2. Stufe | | | |
| MDI | | | 31,9 |
| PPG400 | | | 4,104 |
| PPG1000 | | | 12,402 |
| PE218 | | | 8,208 |
| | | | |
| Äquivalente NCO 2. Stufe | | | 0,2552 |
| Äquivalente OH 2. Stufe | | | 0,0647 |
| Additionsverhältnis NCH OH 2. Stufe | | | 3,95 |
| **Additionsverhältnis NCO OH gesamt** | | | **2,56** |
| Menge 1. + 2. Stufe | | | 99,9 |
| End NCO | | | 11,2 |
| | | | |
| 3. Stufe | | | |
| | | | |
| Desmodur 3300 | | | 20 |
| | | | |
| Äquivalente NCO 3.Stufe | | | 0,1026 |
| Menge gesamt | | | 119,9 |
| End NCO | | | 12,9 |
| Visk. 40°C | | | 4200mPas |
| Farbe | | | klar, gelblich |

### Tabelle 3: Auswertung- der Kaschierversuche mit einem Polyurethanbindemittel gemäß Beispiel 6

**Tabelle 3**

| Verbundaufbau | Auftrag g/m² | Bahngeschwindigkeit m/min. | VH unbedruckt N/15 mm | SNH N/15mm |
|---|---|---|---|---|
| OPA/ PE_{KO88} | 1,9 | 100 | 11,6 PE-Dehnung | 52,1 Verbundabriss im Verbund |
| OPA/ PE_{KO88} | 1,5 | 100 | 11,7 PE-Dehnung | 55,1 Verbundabriss in der Siegelnahtkante |
| OPA/ PE_{KO88} | 1,1 | 100 | 11,1 PE-Dehnung | 55,4 Verbundabriss in der Siegelnahtkante |

### Migrationstest:

Der Migratgehalt wird folgendermaßen festgestellt (siehe Deutsche Lebensmittel Rundschau, 87:, (1991), 280-281):

Ein verschweißter, mit dem erfindungsgemäßen Klebstoff hergestellter Folienverbundbeutel wird mit 3%iger Essigsäure gefüllt und bei 70°C für 2h gelagert. Der Beutelinhalt wird anschließend diazotiert, einer Azokupplung mit N-(1-Naphthyl)ethylendiamin unterzogen und an einer C₁₈-Säule aufkonzentriert. Anschließend wird photometrisch die Konzentration an Azofarbstoff bestimmt.

Die Untersuchungsergebnisse sind der nachfolgenden Tabelle 4 zu entnehmen.

**Tabelle 4: Ergebnisse der Migrationstests**

| Migrate (nach Tagen) | Verbundwerkstoff |
|---|---|
| 01.07.97 (4 Tage) | 9,7 µg AHCL/100 ml |
| 9,7 µg AHCL/100 ml07.07.97 (10 Tage) | 3,8 µg AHCL/100 ml |
| 11.07.97 (14 Tage) | 0,93 µg AHCL/100 ml |
| 21.07.97 (24 Tage) | <0,2 µg AHCL/100 ml |

## Patentansprüche

1. Verfahren zur Herstellung eines Polyurethanbindemittels mit einem Gehalt an leichtflüchtigen, Isocyanatgruppen tragenden Monomeren, die bei 30 °C ein Dampfdruck von mehr als 0,0007 mm/Hg oder einen Siedepunkt von weniger als 190 °C (70 mPa) aufweisen, von weniger als 0,5 Gew.-% und mit einer Viskosität weniger als 5000 mPas, gemessen nach Brookfield RTDV II, Spindel 27, 20 U/min, 50 °C, enthaltend
A) mindestens zwei NCO-Gruppen tragende Polyurethan-Präpolymere, hergestellt durch eine zweistufige Reaktion, wobei in einer
I. ersten Stufe aus einem mindestens difunktionellen Isocyanat und einer ersten Polyolkomponente ein Polyurethan-Präpolymeres herstellt wird, wobei das NCO/OH-Verhältnis kleiner als 2 ist und nach Abschluss der ersten Stufe im Polyurethan-Präpolymere noch freie OH-Gruppen vorliegen und
II. in der zweiten Stufe ein weiteres, mindestens difunktionelles Isocyanat zusammen mit einer weiteren Polyolkomponente in Gegenwart des Polyurethan-Präpolymeren aus der ersten Stufe umgesetzt wird, wobei die NCO-Gruppen dieses Isocyanats eine höhere Reaktivität gegenüber mit Isocyanat reaktiven Verbindungen aufweisen als der überwiegende Anteil der im Polyurethan-Präpolymeren der ersten Stufe vorliegenden NCO-Gruppen und
wobei dieses Isocyanat der zweiten Stufe im molaren Überschuss bezogen auf die freien OH-Gruppen der Mischung aus vorliegendem Präpolymer der ersten Stufe und der weiteren Polyol-Komponente der zweiten Stufe eingesetzt wird und wobei die mindestens zwei NCO-Gruppen tragenden Polyurethan-Präpolymere nach Abschluss der zweiten Stufe mindestens zwei Arten von NCO-Gruppen enthalten, die eine unterschiedliche Reaktivität aufweisen und
B) ein mindestens difunktionelles Isocyanat, dessen Molekulargewicht geringer ist als das Molekulargewicht der in Komponente A enthaltenen Polyurethan-Präpolymeren und dessen NCO-Gruppen eine höhere Reaktivität aufweisen als die in der ersten Stufe der Komponente A enthaltenen Art von NCO-Gruppen geringer Reaktivität, in einer Menge von mindestens 5 Gew.-%, wobei die Komponente B nicht reagierte Anteile des mindestens difunktionellen Isocyanats der Komponente A in der zweiten Reaktionsstufe darstellt.

2. Verfahren nach Anspruch 1, **dadurch gekennzeichnet, dass** in der ersten Stufe das Verhältnis OH : NCO weniger als 1 beträgt, insbesondere mehr als 0,5 bis 0,7.

3. Verfahren nach Anspruch 1 und 2, **dadurch gekennzeichnet, dass** in der zweiten Stufe das Verhältnis OH : NCO 0,2 bis etwa 0,5 beträgt.

4. Verfahren nach einem der Ansprüche 1 bis 3, **dadurch gekennzeichnet, dass** als mindestens difunktionelles Isocyanat in der ersten Stufe Isophorondiisocyanat (IPDI), Tetramethylxylylendiisocyanat (TMXDI), hydriertes Diphenylmethan-diisocyanat (MDIH₁₂) oder Toluylendiisocyanat (TDI) eingesetzt wird und in der zweiten Stufe als weiteres Isocyanat Diphenylmethandiisocyanat (MDI) eingesetzt wird.

5. Verfahren nach einem der Ansprüche 1 bis 4, **dadurch gekennzeichnet, dass** nach Herstellung des Polyurethan-Präpolymeren gemäß Stufe I und II eine weitere Komponente H zugegeben wird, wobei diese aus einem mindestens trifunktionellen Polyisocyanat besteht.

6. Verfahren nach Anspruch 5, **dadurch gekennzeichnet, dass** die Komponente H in einer Menge von 5 bis 25 Gew.-% zugegeben wird.

7. Klebstoff enthaltend ein Polyurethan-Bindemittel hergestellt nach einem Verfahren gemäß der Ansprüche 1 bis 6 und eine weitere Komponente, die mindestens zwei gegenüber NCO-Gruppen reaktionsfähige funktionelle Gruppen enthält und ein Molekulargewicht von bis zu 2500 aufweist oder ein Gemisch von zwei oder mehr solcher Verbindungen.

8. Klebstoff nach Anspruch 7, **dadurch gekennzeichnet, dass** die weitere Komponente ein mindestens zwei OH-Gruppen tragendes Polyol ist.

9. Verwendung eines Klebstoffs nach Anspruch 7 oder 8 zur Verklebung von Folien und zur Herstellung von Folienverbundwerkstoffen.

## Claims

1. A method for preparing a polyurethane binder with a content of easily volatile monomers bearing isocyanate groups, which at 30°C have a vapor pressure greater than 0.0007 mmHg or a boiling point below 190°C (70 mPa), of less than 0.5% by weight and with a viscosity of less than 5,000 mPa.s), measured according to a Brookfield RTDV II, spindle 27, 20 rpm, 50°C, containing:
A) at least two polyurethane prepolymers bearing NCO groups, prepared by a two-step reaction, wherein in a
I. first step, a polyurethane prepolymer is prepared from one at least difunctional isocyanate and one first polyol component, wherein the NCO/OH ratio is less than 2 and after completion of the first step, free OH groups are still present in the polyurethane prepolymer and
II. in the second step, one further at least difunctional isocyanate together with a further polyol component, is reacted in the presence of the polyurethane prepolymer from the first step, wherein the NCO groups of this isocyanate have higher reactivity towards compounds reactive with isocyanate than the predominant portion of the NCO groups present in the polyurethane prepolymer from the first step and
wherein this isocyanate from the second step is applied in molar excess relatively to the free OH groups of the mixture of the present prepolymer from the first step and of the further polyol component from the second step and wherein the at least two polyurethane prepolymers bearing NCO groups upon completion of the second step, contain at least two types of NCO groups, which have different reactivity and
B) one at least difunctional isocyanate, the molecular weight of which is smaller than the molecular weight of the polyurethane prepolymer contained in component A and the NCO groups of which have higher reactivity than the lower reactivity of the type of NCO groups contained in the first step of the component A, in an amount of at least 5% by weight, wherein the component B represents the unreacted portions of the at least difunctional isocyanate of the component A in the second reaction step.

2. The method according to claim 1, **characterized in that** in the first step, the OH:NCO ratio is less than 1, in particular larger than 0.5-0.7.

3. The method according to claim 1 and 2, **characterized in that** in the second step, the OH:NCO ratio is from 0.2 to about 0.5.

4. The method according to any of claims 1 to 3, **characterized in that** isophorone diisocyanate (IPDI), tetramethylxylylene diisocyanate (TMXDI), hydrogenated diphenylmethane diisocyanate (MDIH₁₂) or toluylene diisocyanate (TDI) is applied as one at least difunctional isocyanate in the first step and diphenylmethane diisocyanate (MDI) is applied as a further isocyanate in the second step.

5. The method according to any of claims 1 to 4, **characterized in that** after preparation of the polyurethane prepolymer according to steps I and II a further component H is added, the latter consisting of one at least trifunctional polyisocyanate.

6. The method according to claim 5, **characterized in that** the component H is added in an amount from 5 to 25% by weight.

7. An adhesive containing a polyurethane binder prepared in accordance with a method according to claims 1 to 6 and a further component, which contains at least two functional groups able to react with NCO groups and has a molecular weight up to 2,500, or a mixture of two or more of such compounds.

8. The adhesive according to claim 7, **characterized in that** the further component is a polyol bearing at least two OH groups.

9. The use of an adhesive according to claim 7 or 8 for adhesively bonding films and for preparing film composite materials.

## Revendications

1. Procédé pour la préparation d'un liant de polyuréthane possédant une teneur en monomères très volatils portant des groupes isocyanate, qui présentent, à 30 °C, une pression de vapeur supérieure à 0,0007 mm/Hg ou un point d'ébullition inférieur à 190 °C (70 mPa), inférieure à 0,5 % en poids et possédant une viscosité inférieure à 5000 mPa.s, mesurée conformément à Brookfield RTDV II, broche 27, 20 tours/minute, 50 °C, contenant :
A) des prépolymères de polyuréthane portant au moins deux groupes NCO, que l'on prépare via une réaction en deux étapes dans lesquelles
I. dans une première étape, on prépare un prépolymère de polyuréthane à partir d'un isocyanate au moins difonctionnel et d'un premier composant de polyol, le rapport des groupes NCO/OH étant inférieur à 2, et des groupes OH libres étant encore présents dans le prépolymère de polyuréthane au terme de la première étape ; et
II. dans la deuxième étape, on fait réagir un isocyanate supplémentaire au moins difonctionnel conjointement avec un autre composant de polyol en présence du prépolymère de polyuréthane de la première étape, les groupes NCO de cet isocyanate présentant une réactivité vis-à-vis de composés aptes à réagir avec des groupes isocyanate supérieure à celle de la fraction principale des groupes NCO présents dans le prépolymère de polyuréthane de la première étape, et dans lequel cet isocyanate de la deuxième étape est mis en oeuvre en un excès molaire rapporté aux groupes OH libres du mélange du prépolymère obtenu à la première étape et du composant de polyol supplémentaire de la deuxième étape, et
dans lequel les prépolymères de polyuréthane portant au moins deux groupes NCO contiennent, au terme de la deuxième étape, au moins deux types de groupes NCO qui présentent une réactivité différente ; et
B) un isocyanate au moins difonctionnel dont le poids moléculaire est inférieur au poids moléculaire des prépolymères de polyuréthane contenus dans le composant A et dont les groupes NCO présentent une réactivité supérieure à celle du type de groupes NCO de réactivité inférieure contenus dans la première étape de préparation du composant A, en une quantité d'au moins 5 % en poids, le composant B représentant des fractions n'ayant pas réagi de l'isocyanate au moins difonctionnel du composant A dans la deuxième étape réactionnelle.

2. Procédé selon la revendication 1, **caractérisé en ce que,** dans la première étape, le rapport des groupes OH : NCO est inférieur à 1, en particulier supérieur à une valeur de 0,5 à 0,7.

3. Procédé selon les revendications 1 et 2, **caractérisé en ce que,** dans la deuxième étape, le rapport des groupes OH : NCO s'élève de 0,2 à environ 0,5.

4. Procédé selon l'une quelconque des revendications 1 à 3, **caractérisé en ce que** l'on met en oeuvre, à titre d'isocyanate au moins difonctionnel, dans la première étape, de l'isophoronediisocyanate (IPDI), du tétraméthylxylylènediisocyanate (TMXDI), du diphénylméthanediisocyanate hydrogéné (MDIH₁₂) ou du toluylènediisocyanate (TDI) et, dans la deuxième étape, à titre d'isocyanate supplémentaire, du diphénylméthanediisocyanate (MDI).

5. Procédé selon l'une quelconque des revendications 1 à 4, **caractérisé en ce que**, après la préparation du prépolymère de polyuréthane conformément aux étapes I et II, on ajoute un composant H supplémentaire, ce composant étant constitué d'un polyisocyanate au moins trifonctionnel.

6. Procédé selon la revendication 5, **caractérisé en ce que** le composant H est ajouté en une quantité de 5 à 25 % en poids.

7. Adhésif contenant un liant de polyuréthane préparé conformément à un procédé selon les revendications 1 à 6 et un composant supplémentaire qui contient au moins deux groupes fonctionnels aptes à réagir vis-à-vis de groupes NCO et qui présente un poids moléculaire s'élevant jusqu'à 2500, ou bien un mélange de deux composés de ce type ou plus.

8. Adhésif selon la revendication 7, **caractérisé en ce que** le composant supplémentaire représente un polyol portant au moins deux groupes OH.

9. Utilisation d'un adhésif selon la revendication 7 ou 8, pour le collage de feuilles et pour la fabrication de matériaux composites en feuilles.
